# EUROPÄISCHE PATENTSCHRIFT

(11) **EP 0 656 402 B1**
(45) Veröffentlichungstag und Bekanntmachung des Hinweises auf die Patenterteilung: **20.12.2000**
(21) Anmeldenummer: 94810662.0
(22) Anmeldetag: 23.11.1994
(51) Int. Cl.: C09B 67/20, C09B 67/22, C09B 67/00, C09B 57/00, C09B 67/08

(54) **Pigmentzusammensetzung aus modifiziertem Diketopyrrolopyrrol und Aminoalkylacrylatharz**
Pigment compositions based on diketopyrrolopyrrols and an aminoalkyl acrylic resin
Compositions pigmentaires à base de dicetopyrrolopyrroles et de résine aminoalkyleacrylique

(30) Priorität: 01.12.1993 CH 357593
(43) Veröffentlichungstag der Anmeldung: 07.06.1995
(73) Patentinhaber: Ciba Specialty Chemicals Holding Inc., 4057 Basel (CH)
(72) Erfinder: Bugnon, Philippe, Dr., CH-1724 Essert (CH)

(56) Entgegenhaltungen:
- EP-A- 0 022 746
- EP-A- 0 201 347
- EP-A- 0 224 445
- EP-A- 0 296 111
- EP-A- 0 466 646
- EP-A- 0 511 165
- DE-A- 4 037 556
- GB-A- 2 255 565
- US-A- 3 884 871

## Beschreibung

Die vorliegende Anmeldung betrifft eine Pigmentzusammensetzung enthaltend ein Diketopyrrolopyrrolpigment auf dessen Teilchenoberfläche eine metallorganische Verbindung oder ein modifiziertes Diketopyrrolopyrrol adsorbiert ist und einen Aminoalkylacrylatharz sowie deren Verwendung zum Einfärben von hochmolkularem organischem Material.

Aus verschiedenen Publikationen ist bekannt, dass bestimmte Eigenschaften von Pigmenten, darunter auch die Diketopyrrolopyrrole, durch Behandlung mit analogen, leicht modifizierten Produkten und/oder Harzen, verbessert werden können. Das US-Patent 4 791 204 beschreibt z.B. Pigmentzusammensetzungen aus einem Diketopyrrolopyrrolpigment und beispielsweise einem Metall- oder Ammoniumsalz eines sulfonierten Diketopyrrolopyrrols, die sich durch ausserordentlichem rheologischem Verhalten und hohem Glanz der damit erhaltenen Ausfärbungen auszeichnen. Ähnliche Resultate werden gemäss US-Patent 5 200 528 mit Pigmentzusammensetzungen aus einem Diketopyrrolopyrrolpigment und einem mindestens einen Aminoalkoxyrest enthaltenden Diketopyrrolopyrrol erhalten. Aus US-Patent 4 880 472 sind organische Pigmente, u.a. auch Diketopyrrolopyrrolpigmente, bekannt, deren Teilchenoberfläche mit einem festhaftenden, über eine hydroxylgruppenhaltige Zwischenschicht fixierten Überzug aus Metalloxiden versehen ist, welche sich ebenfalls durch ein sehr gutes rheologisches Verhalten auszeichnen. Solche Pigmentzusammensetzungen eignen sich auch zum verzugsfreien Färben von Polyolefinen. Die EP-A 466 646 beschreibt ein Verfahren zum verzugsfreien Färben von Polyolefinen, bei dem die Teilchenoberfläche des Pigments, z.B. eines Diketopyrrolopyrrols, direkt oder indirekt mit einer Schicht eines polaren Polymeren, z.B. eines Acrylpolymeren auf Basis von Acrylsäure, Methacrylsäure und/oder deren Alkylestern, überzogen wird. Bevorzugt wird dabei die Acrylpolymerschicht über eine Silanschicht aufgetragen, die ihrerseits auf einer die Teilchenoberfläche des Pigments umhüllenden Schicht aus hydrolysiertem Zirkonacetylacetonat adsorbiert ist. Aus US-Patent 4 734 137 ist ein Verfahren zur Herstellung von Azo-, Thioindigo und insbesondere Chinacridonpigmenten mit gutem rheologischem Verhalten und hohem Glanz bekannt, welches darin besteht eines der obenerwähnten Pigmente in einem aprotischen polaren Lösungsmittel in Gegenwart eines Alkalyhydroxids und Wasser zu lösen und danach durch Zugabe einer wässrigsauren Lösung eines Aminoalkylacrylatharzes ein Pigmentpräparat auszufällen, das nach der Isolierung nach üblichen Methoden, die gewünschten Eigenschaften besitzt. Eine ähnliche Zusammensetzung, welche ein anionisches Tensid enthält, ist in JP-AO 58-215 461 beschrieben.

Gemäss der vorliegenden Erfindung ist nun gefunden worden, dass bestimmte Diketopyrrolopyrrolpigmente auf deren Teilchenoberfläche, in bereits bekannter Weise, eine metallorganische Verbindung oder ein modifiziertes Diketopyrrolopyrrol adsorbiert ist und die zusätzlich mit einem Aminoalkylacrylatharz behandelt werden, ganz ungeahnt hohe Eigenschaften, insbesondere Glanz und rheologisches Verhalten, besitzen.

Die vorliegende Erfindung betrifft demnach eine Pigmentzusammensetzung enthaltend
A) ein 1,4-Diketopyrrolo[3,4-c]pyrrol-Pigment der Formel 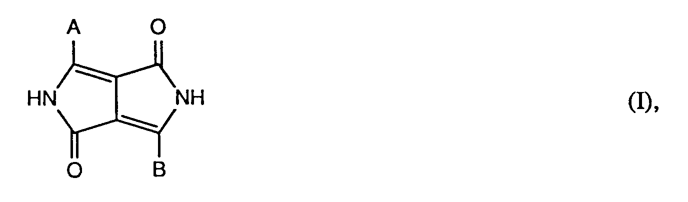 worin A und B unabhängig voneinander eine Gruppe der Formel 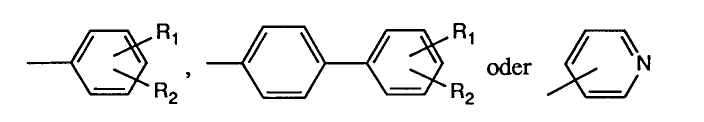 bedeuten, worin R₁ und R₂ unabhängig voneinander Wasserstoff, Halogen, C₁-C₁₈-Alkyl oder CN ist,
   auf dessen Teilchenoberfläche
   i) 0,1-10 Gew.%, bezogen auf das Diketopyrrolopyrrol der Formel I, einer partiell hydrolysierten organischen Verbindung ausgewählt aus der Gruppe bestehend aus Chelaten der Formel 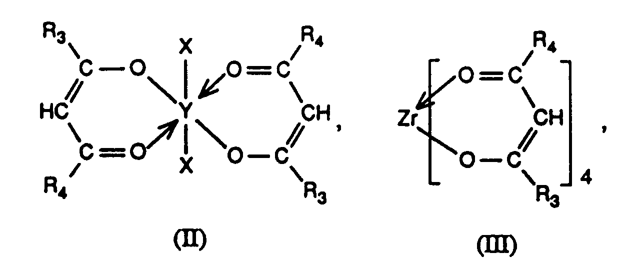 worin R₃ Methyl oder Ethyl, R₄ Methyl, Ethyl, Methoxy oder Ethoxy, X Halogen oder C₁-C₄-Alkoxy sind und Y Ti oder Sn bedeutet, oder aus Estern der Formel

      Q(OR₅)₄ (IV),

      worin Q ein Metall ausgewählt aus Sn, Si, Pb, Ge, Ti oder Zr ist, und R₅ C₁-C₄-Alkyl bedeutet, oder
   ii) 0,1-10 Gew.%, bezogen auf das Diketopyrrolopyrrol der Formel I, eines Diketopyrrolopyrrols der Formel 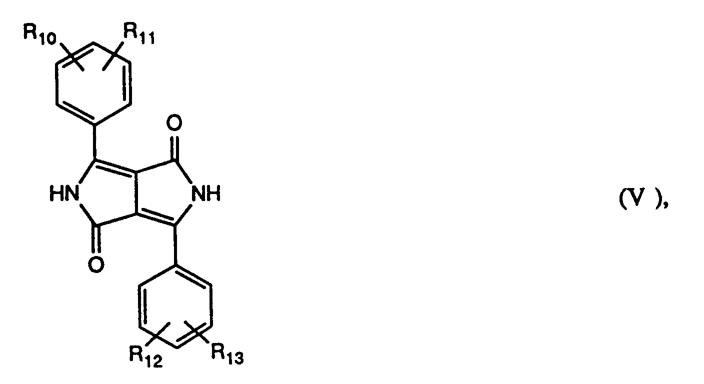 worin R₁₀, R₁₁, R₁₂ und R₁₃ unabhängig voneinander Wasserstoff, Cl, Br, CH₃, OCH₃, CN oder Phenyl bedeuten und mindestens einer der Reste R₁₀, R₁₁, R₁₂, und R₁₃ eine Gruppe

      -O(CH₂)ₘ-Z oder -O(CH₂CH₂O)ₚCH₂CH₂Z

      ist, worin
      m eine Zahl von 2 bis 6 und
      p die Zahl 1 oder 2 bedeuten und
      Z einen heterocyclischen Rest aus der Gruppe bestehend aus Imidazolyl, Pyrazolyl, Morpholinyl, Piperidinyl, Pyrrolidinyl und Triazolyl,
         oder eine Gruppe -NR₁₄R₁₅bedeutet, worin R₁₄ und R₁₅ unabhängig voneinander Wasserstoff, Methyl oder Ethyl bedeuten,
   adsorbiert sind und
B) 0,1-20 Gew.%, bezogen auf das Diketopyrrolopyrrol der Formel I, eines Acrylharzes erhältlich durch Homopolymerisation eines Monomeren der Formel 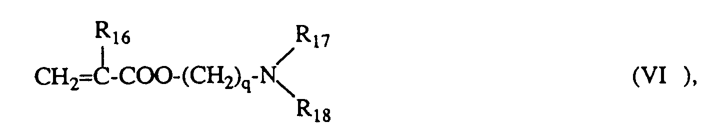 worin R₁₆ Wasserstoff oder Methyl und R₁₇ und R₁₈ unabhängig voneinander Wasserstoff, Methyl oder Ethyl bedeuten und q eine Zahl von 1 bis 6 ist, oder durch Copolymerisation des gleichen Monomeren mit einem mit letzterem copolimerisierbaren Monomeren.

Bedeuten etwaige Substituenten C₁-C₄-Alkyl, so handelt es sich um Methyl, Ethyl, n-Propyl, Isopropyl, n-Butyl, sec.-Butyl oder tert.-Butyl. C₁-C₁₈-Alkyl bedeutet zusätzlich z.B. n-Amyl, tert.-Amyl, Hexyl, Heptyl, Octyl, 2-Ethylhexyl, Nonyl, Decyl, Dodecyl, Tetradecyl, Hexadecyl oder Octadecyl.

C₁-C₄-Alkoxy bedeutet z.B. Methoxy, Ethoxy, n-Propoxy, Isopropoxy, Butyloxy oder tert.-Butyloxy.

Halogen bedeutet z.B. Jod, Fluor, insbesondere Brom und bevorzugt Chlor.

C₅-C₆-Cycloalkyl steht z.B. für Cyclopentyl und insbesondere für Cyclohexyl.

Die Komponenten i) und ii) werden bevorzugt in einer Menge von 0,5-5 Gew.%, bezogen auf das Diketopyrrolopyrrol der Formel I, eingesetzt.

Im Diketopyrrolopyrrol-Pigment der Formel I sind A und B vorzugsweise gleich und bedeuten bevorzugt eine Gruppe der Formel 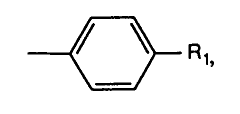 worin R₁ Methyl oder tert.-Butyl ist.

Von besonderem Interesse sind die erfindungsgemässen Pigmentzusammensetzungen, bei denen auf der Teilchenoberfläche des Pigments der Formel I eine Komponente gemäss (i) adsorbiert ist, insbesondere eine partiell hydrotysierte Verbindung der Formel 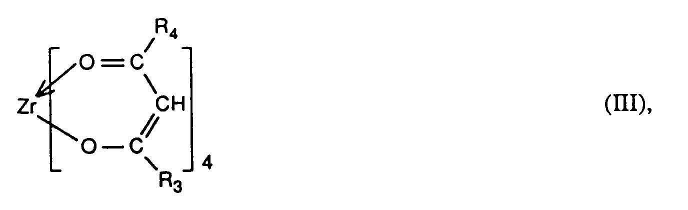 worin R₃ Methyl oder Ethyl und R₄ Methyl, Ethyl, Methoxy oder Ethoxy bedeuten. R₃ und R₄ sind dabei bevorzugt Methyl.

Besonder bevorzugt werden die erfindungsgemässen Pigmentzusammensetzungen, welche einen Acrylharz gemäss B, der durch Homopolymerisation eines Monomeren der Formel VI , worin R₁₆, R₁₇ und R₁₈ Methyl und q die Zahlen 1 oder 2 bedeuten, erhalten wird, in einer Menge von 4-10 Gew.%, bezogen auf das Diketopyrrolopyrrol der Formel I, enthalten.

Die erfindungsgemässen Pigmentzusammensetzungen lassen sich auf einfache Weise, z.B. dadurch herstellen, dass das vorbehandelte Pigment gemäss Ai) oder Aii) in wässriger Suspension mit dem Acrylharz unter Rühren nachbehandelt wird. Dabei kann vom vorbehandelten trockenen Pigmentpulver, einem Presskuchen oder einer aus der Vorbehandlung anfallenden Suspension ausgegangen werden. Der Acrylharz kann entweder vorgängig mit Wasser gelöst werden oder fest der Pigmentsuspension zugegeben werden.

Falls nötig kann die Suspension nach üblichen Methoden mit einem Dispergieraggregat (z.B. einem Hochdruckhomogenisator oder einem Hochgeschwindigkeitsrührer) dispergiert werden. Meistens ist dies nicht nötig, da die Acrylharze im allgemeinen sehr gute benetzende Eigenschaften besitzen. Der Pigmentgehalt (vorbehandeltes Pigment Ai) oder Aii)) in der Suspension kann in weiten Grenzen variiert werden und kann gegebenenfalls bis zu 40 Gew.% betragen. Zweckmässig setzt man Suspensionen mit 5 bis 20 Gew.% Pigment ein. Die Nachbehandlung des Pigments mit dem Acrylharz (B) kann bei Raumtemperatur, gegebenenfalls aber auch bei bis zu ca. 80°C erhöhter Temperatur, durchgeführt werden. Die Rührdauer variiert zwischen 1 und 20 Stunden. Zur Erleichterung der Filtration des behandelten Pigments können auch Filtrationshilfsmittel, wie z.B. 0,5 bis 15 Gew.% einer aliphatischen 1,2-Dihydroxyverbindung mit 8 bis 22 C-Atomen, insbesondere 1 bis 5 Gew.% 1,2-Dodecandiol, eingesetzt werden, sofern diese keine negative Wirkung bei der Verwendung der erfindungsgemässen Pigmentzusammensetzungen zeigen. Analoge Zusätze (z.B. übliche Dispergiermittel) können auch in üblichen Mengen zur Verbesserung der Dispergierbarkeit des Produktes zugesetzt werden.

Die Pigmentpräparate (Ai) und (Aii) sind bekannt und können nach allgemein üblichen Methoden hergestellt werden, z.B. durch Zugabe der Komponenten gemäss (i), oder (ii) in Pulverform, in Lösung oder in Suspension zu einer wässrigen oder alkoholischen Suspension des Pigments der Formel I und Verrühren des Gemisches unter üblichen Bedingungen. Die Komponenten gemäss (Ai) sind z.B. in US-Patent 4 880 472 und (Aii) in US-Patent 5 200 528 beschreiben.

Der Acrylharz gemäss (B) ist ebenfalls bekannt und kann nach üblichen Methoden, wie z.B. in US-Patent 4 734 137 beschrieben, hergestellt werden.

Die erfindungsgemässen Pigmentzusammensetzungen können als Pigmente zum Färben von hochmolekularem organischem Material verwendet werden.

Hochmolekulare organische Materialien, die mit den erfindungsgemässen Pigmentzusammensetzungen gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkyldharze, Phenoplaste, Polycarbonate, Polyolefine, Polystyrol, Polyvinylchlorid, Polytetrafluoroethylen, Polyamide, Polyurethane, Polyester, Polyether-ketone, Polyphenylenoxide, Gummi, Casein, Silikon und Silikonharze, einzeln oder in Mischungen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Pigmentzusammensetzungen als Toner oder in Form von Präparaten einzusetzen. Bezogen auf das zu pigmentierende hochmolekulare organische Material kann man die erfindungsgemässen Pigmentzusammensetzungen in einer Menge von 0,01 bis 30 Gew.%, vorzugsweise von 0,1 bis 10 Gew.%, einsetzen.

Zum Pigmentieren von Lacken und Druckfarben werden die hochmolekularen organischen Materialien und die erfindungsgemässen Pigmentzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie hohe Farbstärke, gute Dispergierbarkeit, gute Überlackier-, Migrations-, Hitze-, Licht- und Wetterbeständigkeit sowie auch geringe Viskosität aus.

Ferner weisen die erfindungsgemässen Pigmentzusammensetzungen im Vergleich zu den unmodifizierten Basispigmenten und auch zu den gemäss Stand der Technik behandelten Pigmenten verbesserte anwendungstechnische Eigenschaften in der Applikation auf, wie eine verbesserte Rheologie und Lagerbeständigkeit, geringere Trenneffekte wie Ausschwimmen bei der Mitverwendung von z.B. Weisspigmenten, eine geringere Flockulationstendenz und unerwartet hohen Glanz der damit erhaltenen Ausfärbungen. Infolge der guten rheologischen Eigenschaften dieser Kompositionen ist es auch möglich, Anstrichstoffe und Lacke hoher Konzentration (sogenannte high loadings) herzustellen. Sie eignen sich demnach vorzugsweise zum Färben von Lacken, insbesondere für Metalleffektlackierungen.

Die folgenden Beispiele erläutern die Erfindung.

### Beispiel 1a:

Einer Lösung von 10 g Dimethylaminoethylmethacrylat in 30 g Wasser werden 0,1 g K₂S₂O₈ (1 Gew.% Initiator, bezogen auf das Monomere) zugefügt. Die Lösung wird mehrmals entgast, mit Stickstoff gespült und unter Stickstoff-Atmosphäre während 5 Stunden bei 30°C gerührt. Danach wird die Lösung mit 40 ml Wasser verdünnt. Es bildet sich zuerst eine hochviskose Masse, die sich aber wieder verflüssigt.

b) 21,6 g eines 46,5 %igen wässrigen Presskuchens von 1,4-Diketo-3,6-di (4-tert-butylphenyl)-pyrrolo[3,4-c]pyrrols werden in 78 g Wasser zusammen mit 1,2 g Zr(IV)-acetylacetonat während 2 Stunden dispergiert. Die Suspension wird auf 75°C erhitzt und der pH wird mit 0,2 N wässriger NaOH auf 8,5 gestellt. Die Suspension wird 3 Stunden weitergerührt, wobei der pH auf 6,5 sinkt. Danach werden 3,8 g der Polymerlösung (a) zugegeben und erneut 3 Stunden lang weitergerührt. Anschliessend wird die Suspension filtriert und der Rückstand wird mit Wasser gewaschen und bei 80°C getrocknet und pulverisiert.

### Beispiel 2:

Beispiel 1 wird wiederholt mit der einzigen Ausnahme, dass anstelle des 1,4-Diketo-3,6-di(4-tert.-butylphenyl)-pyrrolo[3,4-c]pyrrols die gleiche Gewichtsmenge 1,4-Diketo-3,6-di(4-diphenyl)-pyrrolo[3,4-c]pyrrol verwendet wird.

### Beispiel 3:

21,6 g eines 46,5 %igen Presskuchens von 1,4-Diketo-3,6-di(4-tert.-butylphenyl)-pyrrolo[3,4-c]pyrrol werden in 78 g Wasser dispergiert. 0,12 g des Natriumsalzes von 1,4-Diketo-3,6-diphenylpyrrolo[3,4-c]pyrrol-4',4''-disulfonsäure (hergestellt wie in Beispiel 5 von US-Patent 4 791 204 beschrieben) werden der Suspension zugegeben, welche anschliessend auf 70°C erhitzt wird. Danach werden langsam 0,13 g CaCl₂·2H₂O zugegeben. Die Suspension wird eine halbe Stunde weitergerührt, filtriert und der Rückstand wird mit Wasser gewaschen. Der Filterkuchen wird in 100 g Wasser aufgenommen und mit 3,8 g der gemäss Beispiel 1a) hergestellten Polymerlösung dispergiert. Die Suspension wird 3 Stunden gerührt, filtriert und der Rückstand wird mit Wasser gewaschen, bei 80°C getrocknet und pulverisiert.

### Beispiel 4:

31,4 g eines 32 %igen wässrigen Presskuchens von 1,4-Diketo-3,6-di-(4-methylphenyl)-pyrrolo[3,4-c]pyrrol werden in 69 g Wasser zusammen mit 1,2 g Ti(IV)-di-(acetylacetonat)-di(isopropylat) während 2 Stunden dispergiert. Die Suspension wird auf 70°C erhitzt und der pH wird mit 0,2 N wässriger NaOH auf 8,5 gestellt. Die Suspension wird 2 Stunden weitergerührt, wobei der pH auf 6,7 sinkt. Danach werden 3,8 g der gemäss Beispiel 1a hergestellten Polymerlösung zugegeben und erneut 2 Stunden lang weitergerührt. Anschliessend wird die Suspension filtriert und der Rückstand wird mit Wasser gewaschen und bei 80°C getrocknet und pulverisiert.

### Beispiel 5:

Beispiel 1 wird wiederholt mit der einzigen Ausnahme, dass 4 % Initiator K₂S₂O₈ anstelle von 1 % eingesetzt wird.

### Beispiel 6:

2 g des gemäss Beispiel 1b) erhaltenen Produktes und 48 g Einbrennlack bestehend aus
- 56 g: Alkydharz ALKYDAL® F310 (Bayer AG; 60 %ig in Xylol)
- 13 g: Melaminharz CYMEL® 327 (Cyanamid; 90 %ig in Butanol)
- 25 g: Xylol
- 25 g: Butanol
- 2,5 g: 1-Methoxy-2-Propanol und
- 1 g: Silikonöl (1 %ig in Xylol)
werden nach üblichen Methoden vermischt. Die Applikation des erhaltenen Farblackes erfolgt durch Ablauf auf Glasplatte. Vor dem Einbrennen im Umluftrockenschrank (30 Minuten bei 120°C) lässt man ca. 30 Minuten bei 25° Neigung abluften.

Die Glanzwerte werden mit einem Glanzmesser (Zehntner ZGM 1020®) in 20° Neigung gemäss DIN 67 530 gemessen.

Die so erhaltene Lackierung ergibt im Vergleich zu einer Lackierung mit einem unbeschichteten Pigment einen ungeahnt besseren Glanz.

Beim jeweiligen Ersatz des Produktes von Beispiel 1b) mit den Produkten der Beispiele 2-5 erhält man etwa gleichwertige Resultate.

### Beispiel 7:

Zur Bestimmung des Fliessverhaltens werden die Produkte der Beispiele 1-5 sowie die entsprechnenden unbehandelten Pigmente nach üblichen Methoden in ein Alkyd-Lacksystem (SETAL® 84, Kunstharzfabrick Synthesis BV, Holland; Festkörpergehalt 70 %) eingearbeitet.

Das Fliessverhalten der Lackanreibungen, welche 12 % Pigment und 42 % Gesamtfestkörper enthalten und deren Pigment/Bindemittel-Verhältnis 0,3 beträgt, wird mit einem HAAKE-Viskosimeter ROTOVISCO® RV12 ermittelt (Messtemperatur: 25°C; Messsystem: SV-SP; Scherbereich: D = 0-100 [1/s]).

Die mit den Produkten der Beispiele 1-5 erhaltenen Lackanreibungen zeigen gegenüber der mit unbhandelten Pigmenten erhaltenen Lackanreibungen ein deutlich besseres Fliessverhalten (Viskositätswerte).

## Patentansprüche

1. Pigmentzusammensetzung enthaltend
A) ein 1,4-Diketopyrrolo[3,4-c]pyrrol-Pigment der Formel 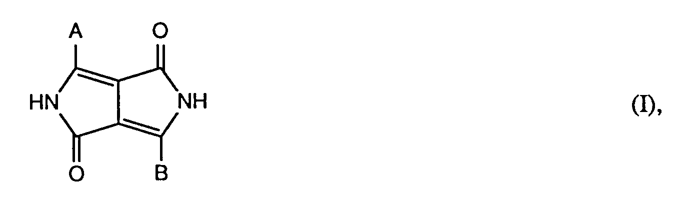 worin A und B unabhängig voneinander eine Gruppe der Formel 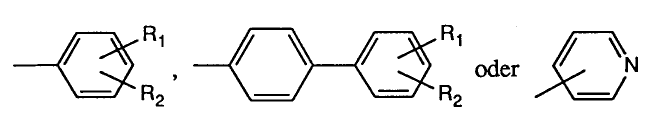 bedeuten, worin R₁ und R₂ unabhängig voneinander Wasserstoff, Halogen, C₁-C₁₈-Alkyl oder CN ist,
auf dessen Teilchenoberfläche
i) 0,1-10 Gew.%, bezogen auf das Diketopyrrolopyrrol der Formel I, einer partiell hydrolysierten organischen Verbindung ausgewählt aus der Gruppe bestehend aus Chelaten der Formel 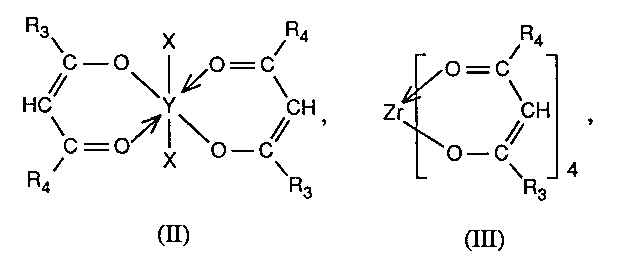 worin R₃ Methyl oder Ethyl, R₄ Methyl, Ethyl, Methoxy oder Ethoxy, X Halogen oder C₁-C₄-Alkoxy sind und Y Ti oder Sn bedeutet, oder aus Estern der Formel
Q(OR₅)₄ (IV),
worin Q ein Metall ausgewählt aus Sn, Si, Pb, Ge, Ti oder Zr ist, und R₅ C₁-C₄-Alkyl bedeutet,
oder
ii) 0,1-10 Gew.%, bezogen auf das Diketopyrrolopyrrol der Formel I, eines Diketopyrrolopyrrols der Formel 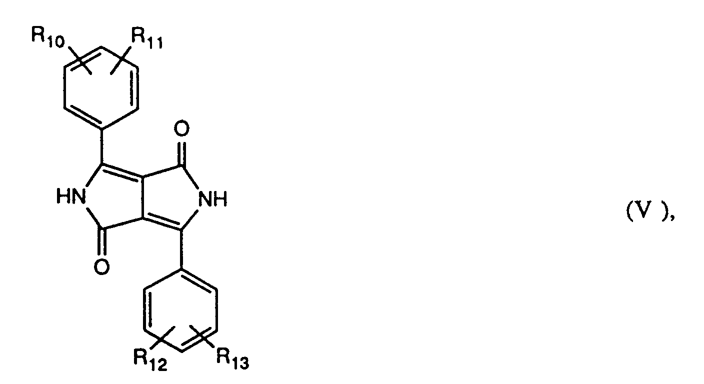 worin R₁₀, R₁₁, R₁₂ und R₁₃ unabhängig voneinander Wasserstoff, Cl, Br, CH₃, OCH₃, CN oder Phenyl bedeuten und mindestens einer der Reste R₁₀, R₁₁, R₁₂, und R₁₃ eine Gruppe
-O(CH₂)ₘ-Z oder -O(CH₂CH₂O)ₚCH₂CH₂Z
ist, worin
m eine Zahl von 2 bis 6 und
p die Zahl 1 oder 2 bedeuten und
Z einen heterocyclischen Rest aus der Gruppe bestehend aus Imidazolyl, Pyrazolyl, Morpholinyl, Piperidinyl, Pyrrolidinyl und Triazolyl,
oder eine Gruppe -NR₁₄R₁₅bedeutet, worin R₁₄ und R₁₅ unabhängig voneinander Wasserstoff, Methyl oder Ethyl bedeuten,
adsorbiert sind und
B) 0,1-20 Gew.%, bezogen auf das Diketopyrrolopyrrol der Formel I, eines Acrylharzes erhältlich durch Homopolymerisation eines Monomeren der Formel 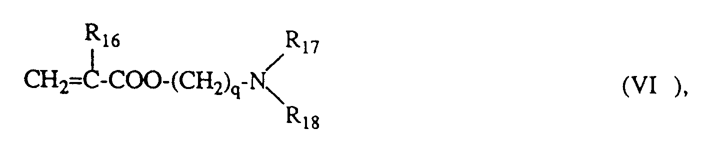 worin R₁₆ Wasserstoff oder Methyl und R₁₇ und R₁₈ unabhängig voneinander Wasserstoff, Methyl oder Ethyl bedeuten und q eine Zahl von 1 bis 6 ist, oder durch Copolymerisation des gleichen Monomeren mit einem mit letzterem copolimerisierbaren Monomeren.

2. Pigmentzusammensetzung gemäss Anspruch 1, dadurch gekennzeichnet, dass die Komponente i) oder ii) in einer Menge von 0,5-5 Gew.%, bezogen auf das Diketopyrrolopyrrol der Formel I, eingesetzt wird.

3. Pigmentzusammensetzung gemäss Anspruch 1, dadurch gekennzeichnet, dass im 1,4-Diketopyrrolo[3,4-c]pyrrol-Pigment der Formel IA und B gleich sind.

4. Pigmentzusammensetzung gemäss Anspruch 3, dadurch gekennzeichnet, dass A und B eine Gruppe der Formel 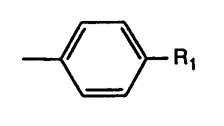 bedeuten, worin R₁ Methyl oder tert.-Butyl ist.

5. Pigmentzusammensetzung gemäss Anspruch 1, dadurch gekennzeichnet, dass auf der Teilchenoberfläche des Pigments der Formel I eine Komponente gemäss (i) adsorbiert ist

6. Pigmentzusammensetzung gemäss Anspruch 5, dadurch gekennzeichnet, dass auf der Teilchenoberfläche des Pigments eine partiell hydrolysierte Verbindung der Formel 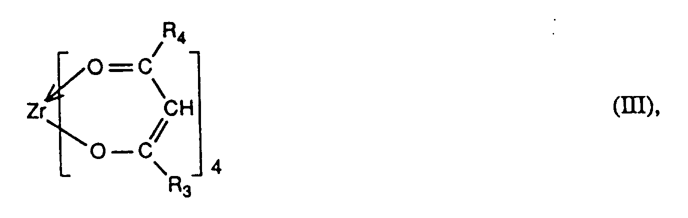 worin R₃ Methyl oder Ethyl und R₄ Methyl, Ethyl, Methoxy oder Ethoxy bedeuten, adsorbiert ist.

7. Pigmentzusammensetzung gemäss Anspruch 6, dadurch gekennzeichnet, dass R₃ und R₄ Methyl bedeuten.

8. Pigmentzusammensetzung gemäss Anspruch 1, dadurch gekennzeichnet, dass auf der Teilchenoberfläche des Pigments der Formel I eine Komponente gemäss (ii) adsorbiert ist, wobei im Diketopyrrolopyrrol der Formel V einer der Reste R₁₀, R₁₁, R₁₂ oder R₁₃ eine Gruppe
-O(CH₂)ₘNR₁₄R₁₅ oder -O(CH₂)ₘZ
ist, worin m eine Zahl von 2 bis 4 bedeutet und R₁₄ und R₁₅ gleich sind und Wasserstoff, Methyl oder Ethyl und Z Morpholin, Piperidinyl oder Pyrrolidinyl bedeuten.

9. Pigmentzusammensetzung gemäss Anspruch 1, dadurch gekennzeichnet, dass sie einen Acrylharz gemäss (B), der durch Homopolymerisation eines Monomeren der Formel VI, worin R₁₆, R₁₇ und R₁₈ Methyl und q die Zahlen 1 oder 2 bedeuten, erhalten wird, in einer Menge von 4-10 Gew.%, bezogen auf das Diketopyrrolopyrrol der Formel I, enthalten.

10. Hochmolekulares organisches Material enthaltend als Farbmittel eine Pigmentzusammensetzung gemäss Anspruch 1.

11. Hochmolekulares organische Material gemäss Anspruch 10, dadurch gekennzeichnet dass es ein Lack oder eine Druckfarbe ist.

## Claims

1. A pigment composition comprising
A) a 1,4-diketopyrrolo[3,4-c]pyrrole pigment of formula 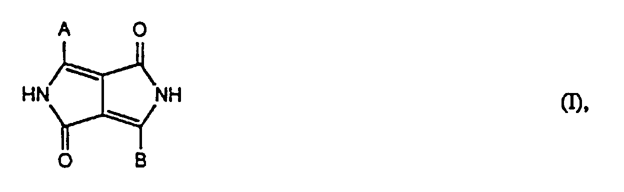 in which A and B are each independently of the other a group of formula 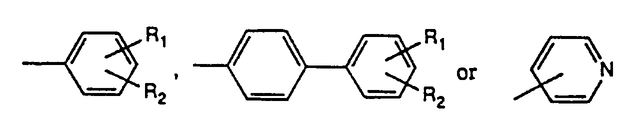 in which R₁ and R₂ are each independently of the other hydrogen, halogen, C₁-C₁₈alkyl or CN,
on the particle surface of which pigment there is adsorbed
i) 0.1-10% by weight, based on the diketopyrrolopyrrole of formula I, of a partially hydrolysed organic compound selected from the group consisting of chelates of formula 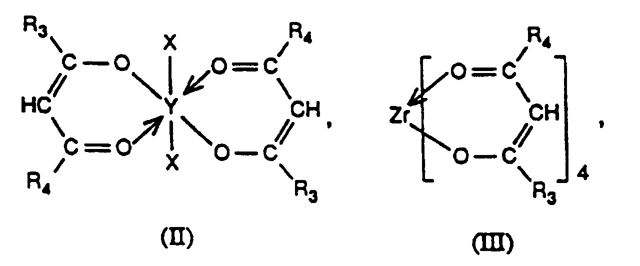 in which R₃ is methyl or ethyl, R₄ is methyl, ethyl, methoxy or ethoxy, X is halogen or C₁-C₄alkoxy, and Y is Ti or Sn, or of esters of formula
Q(OR₅)₄ (IV),
in which Q is a metal selected from Sn, Si, Pb, Ge, Ti or Zr, and R₅ is C₁-C₄alkyl, or
ii) 0.1-10% by weight, based on the diketopyrrolopyrrole of formula I, of a diketopyrrolopyrrole of formula 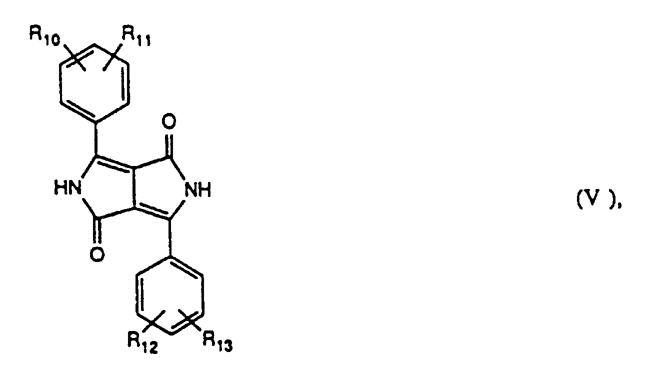 in which R₁₀, R₁₁, R₁₂ and R₁₃ are each indepedently of one another hydrogen, Cl, Br, CH₃, OCH₃, CN or phenyl, and at least one of R₁₀, R₁₁, R₁₂ and R₁₃ is a group
-O(CH₂)ₘ-Z or -O(CH₂CH₂O)ₚCH₂CH₂Z
in which
m is a number from 2 to 6, and
p is 1 or 2, and
Z is a heterocyclic radical from the group consisting of imidazolyl, pyrazolyl, morpholinyl, piperidinyl, pyrrolidinyl and triazolyl,
or is a group -NR₁₄R₁₅, in which R₁₄ and R₁₅ are each independently of the other hydrogen, methyl or ethyl,
and
B) 0.1-20% by weight, based on the diketopyrrolopyrrole of formula I, of an acrylic resin obtainable by homopolymerisation of a monomer of formula 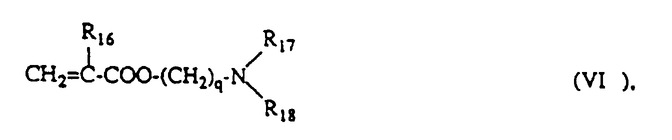 in which R₁₆ is hydrogen or methyl and R₁₇ and R₁₈ are each independently of the other hydrogen, methyl or ethyl, and q is a number from 1 to 6, or by copolymerisation of the same monomer with a monomer which is copolymerisable with said same monomer.

2. A pigment composition according to claim 1, wherein component i) or ii) is used in an amount of 0.5 to 5% by weight, based on the diketopyrrolopyrrole of formula I.

3. A pigment composition according to claim 1, wherein A and B are identical in the 1,4-diketopyrrolo [3,4-c]pyrrole pigment of formula I.

4. A pigment composition according to claim 3, wherein A and B are a group of formula 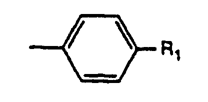 in which R₁ is methyl or tert-butyl.

5. A pigment composition according to claim 1, wherein a component (i) is adsorbed on the particle surface of the pigment of formula I.

6. A pigment composition according to claim 5, wherein a partially hydrolysed compound of formula 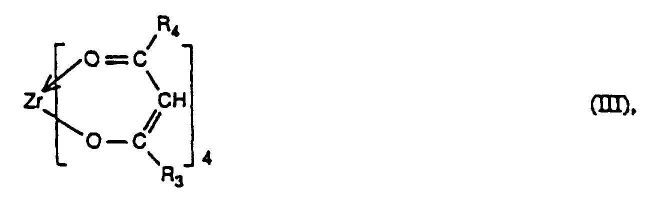 in which R₃ is methyl or ethyl, and R₄ is methyl, ethyl, methoxy or ethoxy, is adsorbed on the particle surface of the pigment.

7. A pigment composition according to claim 6, wherein R₃ and R₄ are methyl.

8. A pigment composition according to claim 1, wherein a component (ii) is adsorbed on the particle surface of the pigment of formula I, and in the diketopyrrolopyrrole of formula V one of R₁₀, R₁₁, R₁₂ or R₁₃ is a group
-O(CH₂)ₘNR₁₄R₁₅ or -O(CH₂)ₘZ,
in which m is a number from 2 to 4, and R₁₄ and R₁₅ are identical and are hydrogen, methyl or ethyl, and Z is morpholino, piperidinyl or pyrrolidinyl.

9. A pigment composition according to claim 1, which comprises an acrylic resin (B), obtained by homopolymerisation of a monomer of formula VI in which R₁₆, R₁₇ and R₁₈ are methyl and q is 1 or 2, in an amount of 4-10% by weight, based on the diketopyrrolopyrrole of formula I.

10. An organic material of high molecular weight comprising as colourant a pigment composition according to claim 1.

11. An organic material of high molecular weight according to claim 10, which is a coating material or a printing ink.

## Revendications

1. Composition pigmentaire contenant
A) un pigment de 1,4-dicéto-pyrrolo[3,4-c]pyrrole de formule 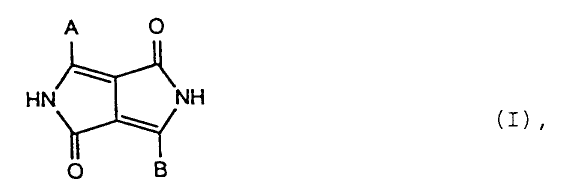 où A et B représentent, indépendamment l'un de l'autre, un groupe de formule 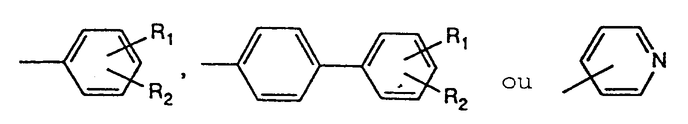 où R₁ et R₂ représentent, indépendamment l'un de l'autre, des atomes d'hydrogène, des atomes d'halogène ou un groupe CN,
dont les particules portent, adsorbés sur leur surface,
i) de 0,1 à 10 % massiques, par rapport au dicétopyrrolopyrrole de formule I, d'un composé organique partiellement hydrolysé pris dans le groupe constitué par des chélates de formule 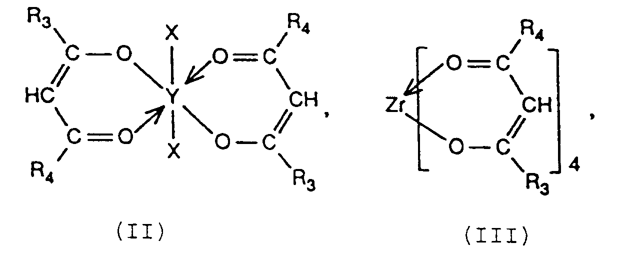 où
R₃ représente des groupes méthyle ou éthyle,
R₄ représente des groupes méthyle, éthyle, méthoxy ou éthoxy,
X représente des atomes d'halogènes ou des groupes alkoxy en C₁-C₄ et
Y représente des atomes de Ti ou de Sn, ou des esters de formule
Q(OR₅)₄ (IV),
où Q représente un métal pris parmi Sn, Si, Pb, Ge, Ti ou Zr et R₅ représente des groupes alkyle en C₁-C₄,
ou
ii) de 0,1 à 10 % massiques, par rapport au dicétopyrrolopyrrole de formule I, d'un dicétopyrrolopyrrole de formule 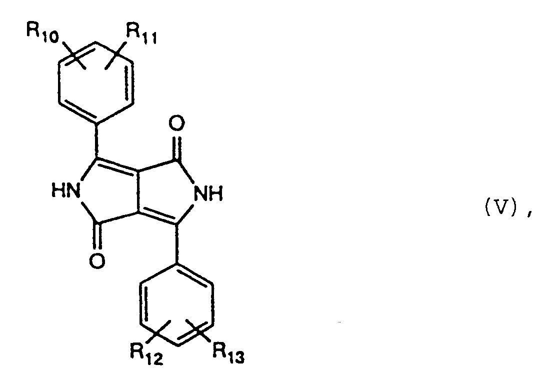 où R₁₀, R₁₁, R₁₂ et R₁₃ représentent, indépendamment les uns des autres, des atomes d'hydrogène, de Cl, de Br, des groupes CH₃, OCH₃, CN ou phényle et au moins un des restes R₁₀, R₁₁, R₁₂ et R₁₃ représente un groupe
-(CH₂)ₘ-Z ou -O(CH₂CH₂O)ₚCH₂CH₂Z
où
m est un nombre de 2 à 6 et
n vaut 1 ou 2 et
Z représente un reste hétérocyclique pris dans le groupe constitué par imidazolyle, pyrazolyle, morpholinyle, pipéridinyle, pyrrolidinyle et triazolyle,
ou représente un groupe de formule NR₁₄R₁₅, où R₁₄ et R₁₅ représentent, indépendamment l'un de l'autre, des atomes d'hydrogène, des groupes méthyle ou éthyle,
et
B) de 0,1 à 20 % massiques, par rapport au dicétopyrrolopyrrole de formule I, d'une résine acrylique que l'on peut obtenir par homopolymérisation d'un monomère de formule 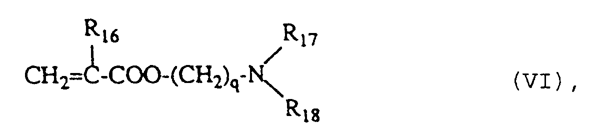 où
R₁₆ représente un atome d'hydrogène ou un groupe méthyle et
R₁₇ et R₁₈ représentent, indépendamment l'un de l'autre, des atomes d'hydrogène, des groupes méthyle ou éthyle et
q est un nombre de 1 à 6,
ou par copolymérisation du même monomère avec un monomère copolymérisable avec ce dernier.

2. Composition pigmentaire selon la revendication 1, caractérisée en ce qu'on utilise le constituant i) ou ii) en une quantité de 0,5 à 5 % massiques, par rapport au dicétopyrrolopyrrole de formule I.

3. Composition pigmentaire selon la revendication 1, caractérisée en ce que A et B sont identiques dans le pigment de 1,4-dicétopyrrolo[3,4-c]pyrrole de formule I.

4. Composition pigmentaire selon la revendication 3, caractérisée en ce qua A et B représentent un groupe de formule 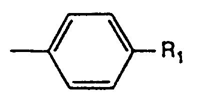 où R₁ représente des groupes méthyle ou tert.-butyle.

5. Composition pigmentaire selon la revendication 1, caractérisée en ce qu'un composé selon (i) est adsorbé sur la surface des particules du pigment de formule I.

6. Composition pigmentaire selon la revendication 5, caractérisée en ce qu'un composé partiellement hydrolysé de formule 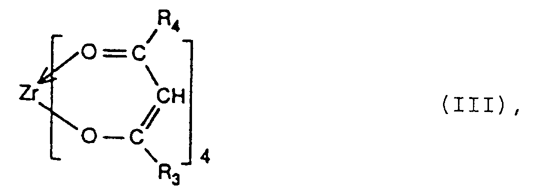 où R₃ représente des groupes méthyle ou éthyle et R₄ représente des groupes méthyle, éthyle, méthoxy ou éthoxy, est adsorbé sur la surface des particules.

7. Composition pigmentaire selon la revendication 6, caractérisée en ce que R₃ représente des groupes méthyle et éthyle.

8. Composition pigmentaire selon la revendication 1, caractérisée en ce qu'un composant selon (ii) est adsorbé sur la surface des particules du pigment de formule I, un des restes R₁₀, R₁₁, R₁₂ ou R₁₃ dans le dicétopyrrolopyrrole de formule V étant un groupe
-(CH₂)ₘ-Z ou -O(CH₂CH₂O)ₚCH₂CH₂Z
où m est un nombre de 2 à 4 et R₁₄ et R₁₅ représentent, des atomes d'hydrogène, des groupes méthyle ou éthyle, et Z représente des groupes morpholine, pipéridinyle ou pyrrolidinyle.

9. Composition pigmentaire selon la revendication 1, caractérisée en ce qu'elle contient une résine acrylique selon (B), qu'on prépare par homopolymérisation d'un monomère de formule VI, où R₁₆, R₁₇ et R₁₈ représentent des groupes méthyle et q vaut 1 ou 2, en une quantité de 4 à 10 % massiques, par rapport au dicétopyrrolopyrrole de formule I.

10. Matière organique de haut poids moléculaire contenant comme colorant une composition pigmentaire selon la revendication 1.

11. Matière de haut poids moléculaire selon la revendication 10, caractérisée en ce qu'elle est un vernis ou une encre d'imprimerie.
